# EUROPEAN PATENT SPECIFICATION

(11) **EP 0 779 625 B1**
(45) Date of publication and mention of the grant of the patent: **21.05.2003**
(21) Application number: 96307488.5
(22) Date of filing: 15.10.1996
(51) Int. Cl.: G11B 33/08, F16F 15/08

(54) **Damper for optical disk drive**
Dämpfer für Antriebsvorrichtung für optische Platten
Amortisseur pour appareil à disque optique

(30) Priority: 15.12.1995 KR 9550672
(43) Date of publication of application: 18.06.1997
(73) Proprietor: Samsung Electronics Co., Ltd., Suwon City, Kyungki-do (KR)
(72) Inventor: Lee, Young-Pyo, Giheung-Eab, Yongin-Gun, Kyungki-Do (KR); Ro, Dae-Sung, Anyang-City, Kyungki-Do (KR); Shin, Hae-In, Suwon-City, Kyungki-Do (KR)
(74) Representative: Neill, Alastair William

(56) References cited:
- EP-A- 0 176 602
- EP-A- 0 665 544
- WO-A-91/00967
- GB-A- 2 166 585
- US-A- 4 442 367

## Description

The present invention relates to a damper for an optical disk drive, and more particularly, though not exclusively, to a damper for an optical disk drive for effectively absorbing vibrations acting on an optical pickup unit.

Generally, an optical disk drive, e.g., a laser disk player (LDP) or a compact disk player (CDP), includes an optical system for emitting a beam of light to an optical disk and picking up the reflected light, a drive system for rotating the optical disk and moving the optical system, and a signal processing system for processing the picked up signal.

The optical disk typically rotates at 200 - 500 RPM, which is very fast compared to that of vinyl records (LP) which rotate at 33 1/3 RPM. Accordingly, in an optical disc player, only the edge around the disk center hole, where information is not recorded, is clamped on a small turntable connected directly to a spindle motor shaft. Thus, the rotation of the optical disk is sensitive to vibrations or shocks to the disk player.

The center of rotation of the optical disk may be in discord with that of the spindle motor shaft due to imprecise machining of the center hole of the optical disk and errors occurring when the optical disk is mounted on the turntable. Further, since the optical disk itself is not always a true circle, there may be even more problems. Off-center rotations combined with vibrations affecting the optical disk drive may lead to data reading errors, skipping and data writing errors of the optical pickup unit. Accordingly, the optical disk drive absorbs vibrations thereto with dampers installed between the frame and the base where the turntable is installed.

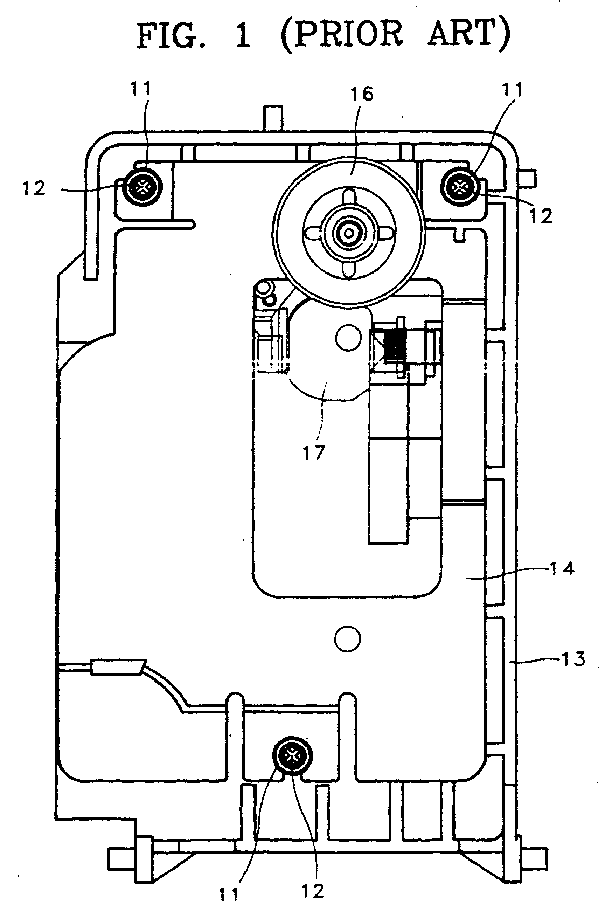

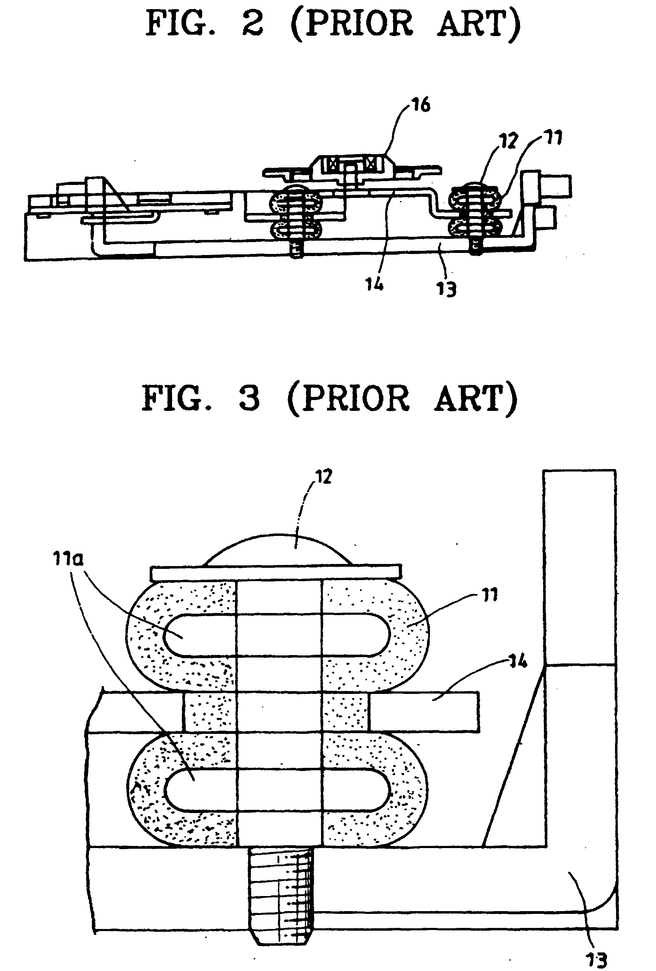

Figures 1 and 2 show schematic diagrams of an optical disk drive in which a plurality of dampers 11 are connected between a frame 13 of the drive and a base 14 of the upper side of the frame 13, where a turntable 16 is installed, by screws 12. In Figure 1, reference numeral 17 denotes an optical pickup unit.

Referring to Figure 3, the conventional damper 11 has a space 11a for absorbing vibrations formed therein. When a shock or vibration is transmitted to the disk drive, the damper 11 elastically deforms within the extent to which the space 11a allows in the vertical direction. Since vibrations transmitted to the disk drive are absorbed by the space 11a of the damper 11, the vibrations transmitted to the turntable 16, where an optical disk (not shown) is seated, are reduced. Accordingly, the errors of the optical pickup unit 17 (in Figure 1) can be reduced or prevented.

However, since the above-mentioned conventional dampers 11 are connected by the screws 12, respectively, it is not easy to maintain precision in the assembly process. When the screws 12 cannot connect accurately in the vertical direction or when the screws 12 are tightened excessively, the space 11a of the dampers 11 lose elasticity, which results in deterioration of vibration damping. On the contrary, when the screws 12 are not sufficiently tightened, the base 14 does not remain horizontal, which results in a deterioration of the optical disk drive performance. Also, the dampers 11 can damp the vertical vibrations, but cannot damp horizontal vibrations. Thus, the optical disk drive must be kept horizontal for optimal performance.

EP-A-0 176 602 discloses a resilient support for an optical disk player having the precharacterising features of claim 1. The support comprises a flexible vessel filled with a viscous fluid. Although this support can damp both horizontal and vertical vibrations, it does not have separate chambers for the horizontal end the vertical vibrations. Furthermore, for the damping properties the viscous fluid is essential.

Accordingly, it is an aim of preferred embodiments of the present invention to provide a damper for an optical disk drive in which vertical and horizontal vibrations are damped and assembly is simple.

According to the present invention, in a first aspect, there is provided a damper for an optical disk drive, connected between a frame and a base on which a turntable is rotatably installed, for damping vibrations transmitted to the turntable, characterised in that said damper is provided with a vertical absorption space for absorbing vertical vibrations, and a horizontal absorption space for absorbing horizontal vibrations.

It is preferable that said damper is provided with a plurality of protrusions for connecting said damper to said frame and said base, each of said frame and said base is formed with a plurality of connection openings corresponding to said protrusions, and said protrusions insert elastically into said connection openings.

Preferably, each of said protrusions is formed with a locking end, and the damper is coupled with said frame and said base by insertion of said locking end into each of said connection openings.

Suitably, the damper is formed of rubber or polyurethane.

According to the present invention in a second aspect, there is provided a damper for an optical disk drive, suitable for connection between a frame and a base on which a turntable is rotably installed, characterised in that the damper is provided with a vertical absorption space (61a, 61b) for absorbing vertical vibrations, and a horizontal absorption space (62) for absorbing horizontal vibrations, in use.

According to the present invention in a third aspect, there is provided an optical disk drive comprising a damper according to any preceding aspect of the invention.

The present invention will become more apparent by describing in detail a preferred embodiment thereof, by way of example only, with reference to the attached drawings; in which:
Figure 1 is a schematic plan view of an optical disk drive having a conventional damper;
Figure 2 is a side view of the optical disk drive of Figure 1;
Figure 3 is an enlarged view of the conventional damper in Figure 2;
Figure 4 is a schematic plan view of an optical disk drive having a damper according to the present invention;
Figure 5 is a side view of the optical disk drive of Figure 4; and
Figure 6 is an enlarged view of the damper according to the present invention in Figure 4.

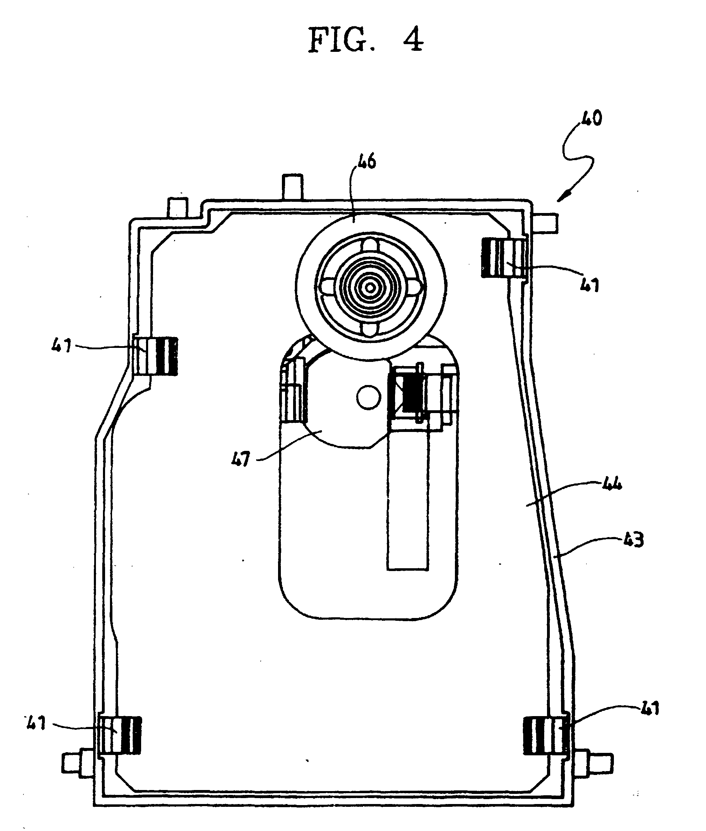

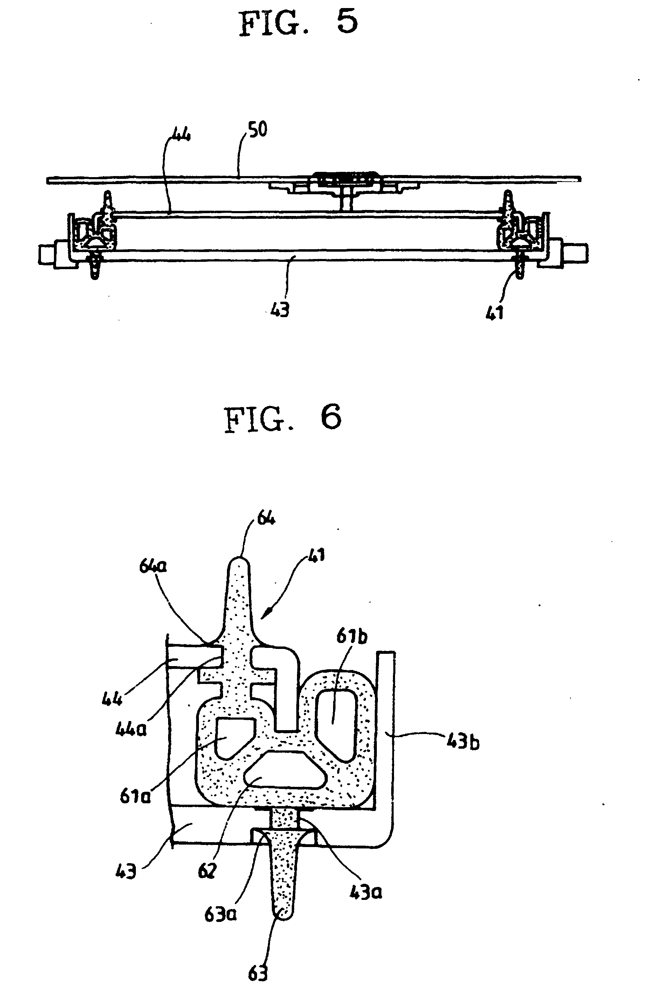

Referring to Figures. 4 and 5, a plurality of dampers 41 for absorbing vibrations are installed between a frame 43 of an optical disk drive 40 and a base 44 of the upper side of the frame 43, where a turntable 46 is disposed.

Referring to Figure 6, the inside of the damper 41 according to the present invention is provided with vertical absorption spaces 61a and 61b for absorbing vertical vibrations and a horizontal absorption space 62 for absorbing horizontal vibrations. Protrusions 63 and 64 connected to the frame 43 and the base 44 are formed on a lower portion and an upper portion of the damper 41, respectively. The protrusions 63 and 64 are inserted elastically into connection openings 43a and 44a formed on the frame 43 and the base 44, respectively.

Since the damper 41 can be formed of various elastic materials, such as rubber or polyurethane, locking ends 63a and 64a of the protrusions 63 and 64 contract as the locking ends 63a and 64a pass through the connection openings 43a and 44a and then expand again, thereby fixing the damper 41 to the frame 43 and the base 44. One side of the damper 41 makes contact with a sidewall 43b of the frame 43.

When vertical shocks or vibrations are transmitted to the optical disk drive having the above-mentioned damper 41, the damper 41 deforms elastically in the vertical direction to the extent the vertical absorption spaces 61a and 61b allow, thereby damping the vertical shock or vibrations.

When horizontal shocks or vibrations are transmitted through the sides of the frame 43, the damper 41 deforms elastically in the horizontal direction to the extent the horizontal absorption space 62 of the damper 41 allow, thereby damping the horizontal shock or vibrations.

As a result, horizontal and/or vertical vibrations to the turntable 46 (in Figure 4) where an optical disk 50 (in Figure 5) is placed is minimized, to thereby prevent errors of an optical pickup unit 47 (in Figure 4).

According to the present invention, since the damper can effectively absorb horizontal and vertical vibrations, the optical disk drive can operate in a horizontal or vertical direction. Also, the damper enables protrusions to be inserted into connection openings of the frame and the base without screws, which leads to simple assembly and enhanced productivity.

## Claims

1. A damper (41) for an optical disk drive (40), suitable for connection between a frame (43) and a base (44) on which a turntable (46) is rotatably installed, for damping both horizontal and vertical vibrations transmitted to the turntable (46), **characterised in that** said damper (41) is provided with a separate vertical absorption space (61a, 61b) for absorbing vertical vibrations, and a separate horizontal absorption space (62) for absorbing horizontal vibrations.

2. A damper (41) for an optical disk drive (40), according to claim 1, wherein said damper (41) is provided with a plurality of protrusions (63, 64) for connecting said damper (41) to said frame (43) and said base (44), each of said frame (43) and said base (44) is formed with a plurality of connection openings (43a, 44a) corresponding to said protrusions (63, 64), and said protrusions insert elastically into said connection openings (43a, 44a).

3. A damper (41) for an optical disk drive (40), according to claim 2, wherein each of said protrusions (63, 64) is formed with a locking end (63a, 64a), and said damper (41) is coupled with said frame (43) and said base (44) by insertion of said locking end (63a, 64a) into each of said connection openings (43a, 44a).

4. A damper (41) for an optical disk drive (40) according to any preceding claim, wherein said damper (41) is formed of rubber or polyurethane.

5. An optical disk drive (40) comprising a damper (41) according to any preceding claim.

## Patentansprüche

1. Dämpfer (41) für ein Laufwerk (40) für optische Platten, der sich zur Anbringung zwischen einem Rahmen (43) und einem Träger (44), auf dem ein Plattenteller (46) drehbar installiert ist, eignet, um sowohl horizontale als auch vertikale Schwingungen zu dämpfen, die auf den Plattenteller (46) übertragen werden, **dadurch gekennzeichnet, dass** der Dämpfer (41) mit einem separaten Vertikal-Absorptionsraum (61a, 61b) zum Absorbieren vertikaler Schwingungen sowie einem separaten Horizontal-Absorptionsraum (62) zum Absorbieren horizontaler Schwingungen versehen ist.

2. Dämpfer (41) für ein Laufwerk (40) für optische Platten nach Anspruch 1, wobei der Dämpfer (41) mit einer Vielzahl von Vorsprüngen (63, 64) versehen ist, um den Dämpfer (41) an dem Rahmen (43) und dem Träger (44) anzubringen, wobei der Rahmen (43) und der Träger (44) mit einer Vielzahl von Anbringungsöffnungen (43a, 44a) versehen sind, die den Vorsprüngen (63, 64) entsprechen, und die Vorsprünge elastisch in die Anbringungsöffnungen (43a, 44a) eingeführt sind.

3. Dämpfer (41) für ein Laufwerk (40) für optische Platten nach Anspruch 2, wobei jeder der Vorsprünge (63, 64) mit einem Arretierende (63a, 64a) versehen ist und der Dämpfer (41) durch das Einführen des Arretierendes (63a, 64a) in jede der Anbringungsöffnungen (43a, 44a) mit dem Rahmen (43) und dem Träger (44) verbunden wird.

4. Dämpfer (41) für ein Laufwerk (40) für optische Platten nach einem der vorangehenden Ansprüche, wobei der Dämpfer (41) aus Gummi oder Polyurethan besteht.

5. Laufwerk (40) für optische Platten, das einen Dämpfer (41) nach einem der vorangehenden Ansprüche umfasst.

## Revendications

1. Amortisseur (41) pour un lecteur de disque optique (40), connecté entre un châssis (43) et une base (44) sur laquelle a été fixée de façon rotative une platine (46), afin d'amortir les vibrations à la fois horizontales et verticales transmises à la platine (46), **caractérisé en ce que** ledit amortisseur (41) est constitué d'un seul matériau et comporte un espace vertical d'absorption séparé (61a, 61b) pour absorber les vibrations verticales, et un espace horizontal d'absorption séparé (62) pour absorber les vibrations horizontales.

2. Amortisseur (41) pour lecteur de disque optique (40), selon la revendication 1, dans lequel ledit amortisseur (41) est muni d'une pluralité de protubérances (63, 64) pour connecter ledit amortisseur (41) audit châssis (43) et à ladite base (44), ledit châssis (43) et ladite base (44) comportent chacun une pluralité d'ouvertures de connexion (43a, 44a) correspondant audites protubérances (63, 64), et lesdites protubérances s'insèrent de façon élastique dans lesdites ouvertures de connexion (43a,44a).

3. Amortisseur (41) pour lecteur de disque optique (40), selon la revendication 2, dans lequel chacune desdites protubérances (63, 64) comporte une extrémité de verrouillage (63a,64a), et ledit amortisseur est couplé audit châssis (43) et à ladite base par l'insertion de ladite extrémité de verrouillage (63a, 64a) dans chacune desdites ouvertures de connexion (43a, 44a).

4. Amortisseur pour lecteur de disque optique (40), selon l'une quelconque des revendications précédentes, dans lequel ledit amortisseur (41) est réalisé en caoutchouc ou polyuréthanne.

5. Lecteur de disque optique (40) comprenant un amortisseur (41) selon l'une quelconque des revendications précédentes.
